# EUROPÄISCHE PATENTSCHRIFT

(11) **EP 1 955 840 B1**
(45) Veröffentlichungstag und Bekanntmachung des Hinweises auf die Patenterteilung: **26.06.2019**
(21) Anmeldenummer: 08100139.8
(22) Anmeldetag: 07.01.2008
(51) Int. Cl.: B29C 51/16, B32B 7/12, B29C 63/02, B29C 51/42, B29C 51/14, B29L 31/30

(54) **VERFAHREN ZUR HERSTELLUNG EINES FORMKÖRPERS**
METHOD FOR MANUFACTURING A MOULDED PRODUCT
PROCÉDÉ DE FABRICATION D'UN CORPS MOULÉ

(30) Priorität: 08.02.2007 DE 102007006201
(43) Veröffentlichungstag der Anmeldung: 13.08.2008
(73) Patentinhaber: Benecke-Kaliko AG, 30419 Hannover (DE)
(72) Erfinder: Malner, Thomas, 73054 Eislingen (DE); Wolff, Roland, 30926 Seelze (DE); Bühring, Jürgen, 73037 Göppingen (DE)
(74) Vertreter: Finger, Karsten

(56) Entgegenhaltungen:
- EP-A2- 0 251 546
- EP-A2- 0 261 815
- EP-A2- 0 363 596
- DE-A1- 4 424 520
- US-A- 2 828 799
- US-A1- 2003 077 420
- US-B1- 6 517 649
- DATABASE WPI Week 200317 Thomson Scientific, London, GB; AN 2003-170269 XP002773995, -& JP 2002 225122 A (SUMITOMO CHEM CO LTD) 14. August 2002 (2002-08-14)
- DATABASE WPI Week 200523 Thomson Scientific, London, GB; AN 2005-217770 XP002773996, -& JP 2005 059578 A (KAO CORP) 10. März 2005 (2005-03-10)
- DATABASE WPI Week 199225 Thomson Scientific, London, GB; AN 1992-205184 -& JP H04 135825 A (TOPPAN PRINTING CO LTD) 11 May 1992 (1992-05-11)

## Beschreibung

Die Erfindung betrifft Verfahren zur Herstellung eines Formkörpers, der aus einem Träger, d.h. einer Trägerstruktur räumlicher Ausdehnung und einer auf die Trägerstruktur aufgebrachten warmformbaren Kunststoff-Folie besteht, insbesondere einer Kunststoff-Folie mit einer dreidimensionalen Oberflächenstruktur auf ihrer der Trägerstruktur abgewandten Oberseite, wobei die Kunststoff-Folie in einem Tiefziehverfahren auf die Trägerstruktur aufgeklebt wird. Weiterhin betrifft die Erfindung eine für das Verfahren besonders geeignete Kunststoff-Folie sowie eine Verwendung des Formkörpers.

Üblicherweise werden mit einer Kunststoff-Folie beschichtete Formkörper, also etwa einbaufertige Armaturenbretter oder Seitenverkleidungen in Kraftfahrzeugen so hergestellt, dass die Kunststoff-Folie auf eine Trägerstruktur bzw. einen Trägerkörper aufgeklebt wird. Das Aufkleben erfolgt dabei durch Tiefziehverfahren, Aufpressverfahren, Drückverfahren etc, wobei ggf. zwischen Kunststoff-Folie und Trägerstruktur ein Unterdruck angelegt wird.

Die Kunststoff-Folie kann dabei aus mehreren Schichten bestehen, beispielsweise aus einer hinterschäumten Kunststoff-Folie. Als Material für die Folien werden oft Polyvinylchlorid (PVC) oder thermoplastische Polyolefine verwendet. Die Folien können auf Ihrer dem Träger zu gewandten Seite auch bereits mit einem Primer versehen sein, der die Adhäsion des später aufgebrachten Klebers verbessert.

Die Folien sind auf ihrer sichtbaren Oberseite oft mit einer dreidimensionalen Struktur oder mit einer Narbung versehen, welche zum Beispiel durch ein Walzverfahren, durch in einer Werkzeugform durchgeführte Sinter- oder Sprühverfahren oder auch durch narbgebende Tiefziehverfahren (Inmould-Graining-Verfahren) aufgebracht werden, wobei letzteres sich als Spezialverfahren aus dem Negativ-Tiefziehverfahren entwickelt hat.

Das Aufkleben der Folie auf den Träger bzw. auf die Trägerstruktur erfolgt in aller Regel unter Wärmeführung innerhalb eines geheizten Werkzeugraums einer Tiefziehanlage, in der die mehr oder weniger gespannte Folie über eine Trägerstruktur, also zum Beispiel ein Tragkörper für eine Armaturenbrett, gezogen / tiefgezogen wird oder eben die Trägerstruktur in die gespannte Folie eingedrückt wird. Das Einformen in die dreidimensionale, bauteil-geometrische Struktur erfolgt dann durch das Einfahren eines die Trägerstruktur aufnehmenden Tiefziehstempels in die Folie. Im Weiteren wird der Begriff "Trägerstruktur" als gleichbedeutend mit "Träger" oder "Trägerteil" angesehen.

Der zwischen Trägerstruktur und Folie erforderliche Kleber wird vor dem Aufkleben bzw. vor dem Zieh- oder Drückverfahren auf die zu verklebende Seite der Trägerstruktur aufgebracht. Dies geschieht entweder manuell mit Sprühpistolen oder durch Automaten (Sprühroboter). Das Trägerteil mit dem Kleber wird dann über eine Trocknerstrecke geleitet, also etwa auf einem Laufband durch einen Trockner-Kanal gefördert, wodurch der Kleber auf dem Trägerteil antrocknet. Wenn dann das Trägerteil in der Tiefziehanlage positioniert ist, wird durch die Wärme der mit etwa einer Temperatur von 80° C aufgelegten heißen Folie der Kleber aktiviert.

Damit sind relativ viele Arbeitschritte für diesen Fertigungsprozess erforderlich, nämlich die Applikation des Klebers, dessen Trocknung, die Erwärmung der Folien als solche, die Lagerung einer ausreichenden Anzahl von mit Kleber versehenen Trägerstrukturen und die im Tiefziehverfahren erfolgende Beschichtung mit der vorgewärmten Folie in der Tiefzehanlage. Bei den Verfahren aus dem Stand der Technik reicht im Übrigen oft schon eine Temperatur von ca. 70° C zur Aktivierung des Klebers aus.

Wird der Kleber dahingegen vor dem Zusammenfügen auf die Folie aufgebracht, ist dies ähnlich aufwendig. Dabei wird etwa über Extrusionsverfahren und ebenfalls umfangreiche Wärmeführung der Folien und der Trägerstrukturen die Klebeseite der Folie mit einem Heiß-Schmelzkleber (HotMelt) beschichtet.

Die EP 0 363 596 A2 offenbart ein Verfahren zur Herstellung von Formteilen für Kraftfahrzeuge oder Kraftfahrzeuginnenverkleidungen im Negativ-Tiefziehverfahren, bei der die dazu verwendete Kunststofffolie oder Kunststoffplatte vor dem Eindringen in die Negativ-Tiefziehform bis in den Schmelzbereich erhitzt wird. Besondere Merkmale eines Klebers sind nicht zu finden.

Die DE 44 24 520 A1 offenbart ein Verfahren zum Kaschieren eines Möbelteils, bei dem eine erwärmte thermoplastisch verformbare Folie in einer Tiefziehform mithilfe von Unterdruck auf ein Möbelteil gezogen und danach mit diesem Möbelteil verpresst wird. Die Erwärmung des Kaschier-Klebers erfolgt durch die Restwärme der erhitzten Folie beim Tiefziehprozess aktiviert werden kann. Eine Folie für einen Formkörper zur Auskleidung des Innenraums eines Kraftfahrzeugs ist nicht offenbart.

Die US 2 828 799 A offenbart eine stoßfeste Umhüllung für empfindliche Bauteile aus Glas, beispielsweise für Blitzlichtbirnen. Dabei wird ein PTFE-Film erhitzt und über das Bauteil gespannt, wobei der Film gedehnt wird und an die Form des Bauteils sich anpasst und dort anschmilzt. Eine besondere Nutzung oder Behandlung eines Klebers ist nicht offenbart.

Die US 2003/077420 A1 offenbart einen Beschichtungsverfahren unter Wärmeeinfluss (Thermolaminat), bei dem eine durch Wärme verformbare Folie auf einen Gegenstand thermisch aufgeschrumpft wird. Die Folie ist dabei auf ihrer dem Gegenstand zugewandten Seite mit einem Kleberauftrag versehen. Eine besondere Anpassung der Wärmezufuhr ist nicht offenbart.

Weitere Veröffentlichungen zu Beschichtungsverfahren unter Wärmeeinfluss finden sich in den Dokumenten "Database WPI, Week 200523, Thomson Scientific, London, GB, AN 2005-217770, XP-002773996 / 10.03.2005", sowie "Database WPI, Week 200317, Thomson Scientific, London, GB, AN 2003-170269, XP-002773995 / 14.08.2002".

Die EP 261 815 A2 offenbart ein Verfahren zur Herstellung von Innenverkleidungsteilen mit einer metallischen Oberfläche für Automobile. Dabei wird eine mit der metallischen Beschichtung versehenen Folie auf ein Trägerelement aufgebracht. Die Rückseite der Folie ist mit einem Kontaktkleber versehen, der durch Wärme aktiviert werden kann. Besondere Einrichtungen innerhalb der für die Herstellung vorgesehenen Vorrichtung zur Steuerung der Wärmezufuhr sind nicht detailliert offenbart.

Die EP 251 546 A2 offenbart ebenfalls ein Verfahren zur Herstellung von Innenverkleidungsteilen mit einer metallischen Oberfläche für Automobile, bei dem eine Folie mittels eines wärmeaktivierbaren Kontaktklebers auf ein Trägerelement aufgebracht werden kann. Auch hier sind keine besonderen Einrichtungen innerhalb der für die Herstellung vorgesehenen Vorrichtung zur Steuerung der Wärmezufuhr offenbart.

Die US 6 517 649 B1 offenbart einen Vakuum-Beschichtungsprozess, mit dem ein flexibles Material auf eine stabile Trägerstruktur (Substrat) aufgebracht werden kann. Bei diesem Verfahren wird der Kleber nicht auf das flexible Material, das heißt nicht auf die Folie aufgebracht, sondern auf die stabile Trägerstruktur.

Die JP H04 135825 A offenbart ein Beschichtungsverfahren, bei dem eine unter beidseitigem Vakuum erhitzte Folie dadurch auf ein Trägermaterial aufgepresst wird, dass oberhalb der Folie Hochdruck und unterhalb der Folie Unterdruck angelegt wird.

Die Aufgabe der Erfindung bestand also darin, ein sicheres und kostengünstiges Herstellungsverfahren und die hierzu erforderliche Kunststoff-Folie für mit einer solchen Kunststoff-Folie versehene Formkörper bereitzustellen, so dass nur eine geringe Anzahl von Verfahrensschritten und ein verminderter apparativer Aufwand für die Erwärmung der Einzelteile erforderlich wird.

Gelöst wird diese Aufgabe durch die Merkmale des Hauptanspruchs. Weitere vorteilhafte Ausbildungen sind in den Unteransprüchen offenbart.

Dabei ist die Kunststoff-Folie mit einer bereits im Anlieferungszustand vorhandenen Schicht eines aktivierbaren Klebers auf ihrer der Trägerstruktur zugewandten Unterseite versehen. Der Kleber wird erfindungsgemäß vor dem Tiefziehen so aktiviert, dass eine ausreichende Klebfähigkeit der Kleberschicht auf der Trägerstruktur erreicht wird. Die Besonderheit dieses Verfahrens besteht darin, dass die Kunststoff-Folie bereits mit einer Kleberschicht hergestellt wird, in diesem Zustand bis zum Herstellerbetrieb / Herstellungsort der Formkörper transportiert und zwischengelagert werden kann, so dass das direkt vor der Herstellung des Formkörpers doch sehr aufwendige Aufbringen eines Klebers auf die Folie oder auf die Trägerstruktur entfällt und die Klebfähigkeit lediglich aktiviert zu werden braucht.

Der Kleber und die der Kunststoff-Folie zugewandte Oberfläche der Trägerstruktur werden vor dem Tiefziehen soweit erwärmt, dass die Kunststoff-Folie für den Tiefziehprozess verformbar, der Kleber aktiviert und eine ausreichende Klebfähigkeit der Kleberschicht auf der Trägerstruktur erreicht wird. Da bei vielen Herstellungsprozessen die Kunststoff-Folie in einem unter Zufuhr von Wärme durchgeführten Tiefziehverfahren auf die Trägerstruktur aufgeklebt wird, in der Regel also sowieso eine Erwärmung der Kunststoff-Folie für das Tiefziehen und Aufbringen auf die Trägerstruktur erforderlich ist, kann dann in einfacher Weise mit diesem Schritt auch gleichzeitig die Aktivierung des Klebers erfolgen.

Die Kunststoff-Folie, der Kleber und die der Kunststoff-Folie zugewandten Oberfläche der Trägerstruktur werden erst unmittelbar vor der Verformung und Verklebung durch Strahlungsheizungen erwärmt. Hier kann auf einfache Weise eine sehr direkt wirkende und einfach zu dosierende Wärmeenergie in die Folie bzw. die Kleberschicht eingebracht werden.

Die Kunststoff-Folie mit ihrer Kleberschicht wird beidseitig und die der Kunststoff-Folie zugewandten Oberfläche der Trägerstruktur einseitig durch Strahlungsheizungen erwärmt. Dies beschleunigt den Fertigungsprozess und vermeidet eine Überhitzung durch zu großen Wärmeeintrag in das Material von lediglich einer Seite.

Im Sinne einer guten Temperaturkontrolle und -veränderung während der Erwärmung besteht die erfindungsgemäße Ausbildung darin, dass die Abstände der Strahlungsheizungen zur Kunststoff-Folie und/oder zu der der Kunststoff-Folie zugewandten Oberfläche der Trägerstruktur während der Erwärmung verändert werden. In erfindungsgemäßer Weise kann dies dadurch erreicht werden, dass die Trägerstruktur auf einem Hubtisch angeordnet ist, der relativ zu einer der Strahlungsheizungen verfahrbar ist.

Im Hinblick auf eine Optimierung der Stabilität der Trägerstruktur bei der Erwärmung und beim Tiefziehprozess während der Herstellung auf der einen Seite und angesichts der Forderungen in Bezug auf die Haltbarkeit und die Lebensdauer des Formkörpers ergibt sich eine weitere vorteilhafte Weiterbildung dadurch, dass je nach Anwendung die Trägerstruktur aus einem Faserverbundwerkstoff besteht. Bekanntermaßen kann dieser aus einer mit Naturfasern oder Hartfasern versehenen Polymermatrix bestehen oder auch etwa aus Fasern, die in Polypropylen, Polycarbonat oder Acrylnitril-Butadien-Styrol-Copolymerisat eingebettet sind. Auch einfach verleimte und in Form gepresste Hartfasern sind preiswert herzustellen, in Form zu bringen und weisen zudem ausreichende Temperaturfestigkeit aufweisen.

Eine andere vorteilhafte Weiterbildung besteht darin, dass der Kleber aus mehreren Komponenten besteht, von denen mindestens eine bereits im Anlieferungszustand vorhandenen ist und dass der Kleber vor dem Tiefziehen durch Zugabe mindestens einer weiteren Komponente aktiviert und eine ausreichende Klebfähigkeit der Kleberschicht auf der Trägerstruktur erreicht wird. Damit kann man auf einen Teil der Erwärmung verzichten und so eine Energieersparnis erreichen. Auch vereinfacht sich z.B. bei einfachem Aufstreichen einer Aktivierungs-Komponente der apparative Aufwand zur Erwärmung der Folie.

Besonders geeignet zur Durchführung des erfindungsgemäßen Verfahrens ist eine ein- oder mehrschichtige Kunststoff-Folie mit einer einseitigen und bei der Herstellung der Folie aufgebrachten Kleberschicht, wobei der Kleber durch eine Erwärmung in seiner Klebfähigkeit aktivierbar ist und die Temperatur der Aktivierung wesentlich oberhalb der bei Transport und Lagerung der Kunststoff-Folie erreichbaren Temperaturen liegt. Wie bereits erwähnt, kann eine solche Kunststoff-Folie, die bereits bei ihrer Herstellung mit einer Kleberschicht versehen wurde, ohne Problem, d.h. insbesondere ohne Reaktion oder irreversible Verklebung bis zum Herstellerbetrieb / Herstellungsort der Formkörper transportiert und zwischengelagert werden. Bei dem üblichen Transport als Bahnenware in Form großer Folienrollen ist das Vermeiden von Reaktionen des Klebers natürlich ein sehr wesentliches Kriterium.

Die genaue Ausbildung bzw. chemische Zusammensetzung des Klebers hängt nun von den Einsatzbedingungen bei der Herstellung des Formkörpers, von den Möglichkeiten bei der Herstellung der Folie und von den Bedingungen bei Transport und Lagerung der Folienrollen ab. Dazu kommen die Forderungen aus den späteren Einsatzbedingungen des Bauteils, wobei abhängig von Kraftfahrzeughersteller unterschiedliche Anforderungen erfüllt werden müssen. Vorteilhafte Weiterbildungen der Folie im Sinne einer Optimierung des Klebers in Bezug auf Herstellungsprozess und erforderlicher bzw. erreichbarer Reaktionstemperatur bestehen dabei darin, dass
a) der Kleber aus Polypropylen-Block-Copolymer (PP BlockCO) besteht und durch eine Erwärmung auf eine Temperatur von mindestens 155° C in seiner Klebfähigkeit aktivierbar ist
b) der Kleber aus Polypropylen-Random-Copolymer (PP RandomCO) besteht und durch eine Erwärmung auf eine Temperatur von mindestens 140° C in seiner Klebfähigkeit aktivierbar ist
c) der Kleber Polypropylen-Homopolymer (PP) enthält und durch eine Erwärmung auf eine Temperatur von mindestens 165° C in seiner Klebfähigkeit aktivierbar ist
d) der Kleber ein Polyurethan (PU) enthält und durch eine Erwärmung auf eine Temperatur von mindestens 80° C in seiner Klebfähigkeit aktivierbar ist
e) der Kleber ein Methylmethacrylat oder ein polymeres Methylmethacrylat enthält und durch eine Erwärmung auf eine Temperatur von mindestens 60° C in seiner Klebfähigkeit aktivierbar ist
f) der Kleber ein Phenol-Formaldehydharz enthält und durch eine Erwärmung auf eine Temperatur von mindestens 160° C in seiner Klebfähigkeit aktivierbar ist.
g) der Kleber Epoxy-Gruppen enthält und durch eine Erwärmung auf eine Temperatur von mindestens 140° C in seiner Klebfähigkeit aktivierbar ist.

Der wesentliche Vorteil eines reversibel wärmeaktivierbaren Klebers ist die unbegrenzte Lager und Transportfähigkeit. Um die Kundenforderung nach Wärmebeständigkeit des Bauteils zu erfüllen ist es notwendig, dass das Aufschmelzen des Klebstoffsystems oberhalb der erreichbaren Einsatztemperaturen für die Bauteile liegt, die ja zum Teil einer direkten Sonnenbestrahlung ausgesetzt sind, wie z.B. Türbrüstung und Instrumententafel. Um eine sichere Verklebung zu gewährleisten muß die Schmelztemperatur des Klebers um einen gewissen Mindestbetrag oberhalb der erreichbaren Einsatztemperaturen liegen.

Der Vorteil von Polypropylen (PP) - Klebstoffen / Polyethylen (PE) - Klebstoffen ist die direkte Haftung auf olefinischen Trägermaterialien wie z.B. Glasfaserverstärktes PP für Instrumententafeln. Der Vorteil einer PU Klebstoffschicht ist die Haftung auf polaren Trägermaterialien wie z.B. Polycarbonat - Acrylnitril-Butadien-Styrol-Copolymerisat (PC-ABS) oder Polyamid - PP. Mit beiden Materialklassen können Klebstoffanwendungen für fast alle Trägermaterialien abgedeckt werden.

Eine weitere vorteilhafte Weiterbildung besteht darin, dass die Kunststoff-Folie als eine mindestens zweischichtige Folie ausgebildet ist, wobei die untere, der Trägerstruktur zugewandte Schicht, als eine geschäumte Schicht ausgebildet ist. Mit einer solchen oberen Dekorfolie und einer darunter angeordneten Schaumfolie niedrigerer Dichte erhält man eine ansprechende Haptik, d.h. eine angenehm "weiche" Griffigkeit des Bezuges auf den doch relativ harten Trägerstrukturen. Dies kommt dem im Bereich des Automobilinterieurs sichtbaren starken Trend zur Verbesserung der Qualitätsanmutung entgegen. Dabei können natürlich verschiedene Arten von Kunststoffen als Dekorfolien und Schaumfolien kombiniert werden.

In einer vorteilhaften Ausbildung besteht die Folie dann aus einer oberen Schicht aus Polyolefin und einer darunter angeordneten Schicht aus geschäumtem Polyolefin oder aus einer oberen Schicht aus Polyvinylchlorid und einer darunter angeordneten Schicht aus geschäumtem Polyolefin.

In besonders vorteilhafter Weise lässt sich ein derart hergestellter Formkörper zur Auskleidung des Innenraums eines Kraftfahrzeugs verwenden, beispielsweise als Türverkleidung, als Armaturenbrett, als Sitzschale oder als Kofferraumabdeckung etc.

Anhand eines Ausführungsbeispieles soll die Erfindung näher erläutert werden. Es zeigen
- Fig. 1: eine zur Durchführung des erfindungsgemäßen Verfahrens besonders geeignete Kunststoff-Folie
- Fig. 2: eine Vorrichtung zur Durchführung des erfindungsgemäßen Verfahrens im Prinzip.

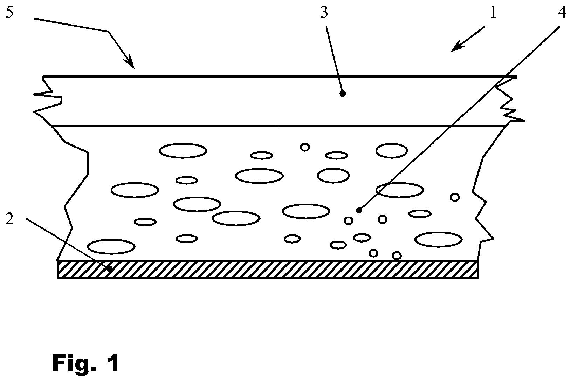

Die Fig. 1 zeigt ist eine zweischichtige Kunststoff-Folie 1 mit einer auf ihrer Unterseite bei der Herstellung der Folie aufgebrachten Kleberfolie bzw. Schicht eines Klebers 2, wobei der Kleber durch eine Erwärmung in seiner Klebfähigkeit aktivierbar ist und die Temperatur der Aktivierung wesentlich oberhalb der bei Transport und Lagerung der Kunststoff-Folie erreichbaren Temperaturen liegt.

Die Folie besteht dabei aus der Deckfolie 3 aus Polyolefin und der Schicht 4 aus geschäumtem Polyolefin. Die Gesamtdicke der Folie beträgt dabei 2,5 mm. Die Folie ist auf ihrer sichtbaren Oberseite mit einer Narbung 5 versehen, welche bei der Herstellung der Folie durch ein Walzverfahren aufgebracht wird. Der hier als Klebefolie aufgebrachte Kleber 2 besteht aus Polypropylen-Block-Copolymer (PP BlockCO) und ist durch eine Erwärmung auf eine Temperatur von mindestens 155° C in seiner Klebfähigkeit aktivierbar.

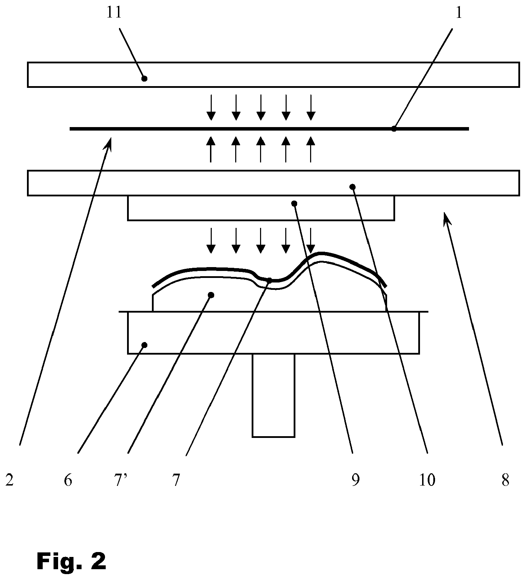

Fig. 2 zeigt prinzipiell eine Vorrichtung zur Durchführung des erfindungsgemäßen Verfahrens. In einem hier nicht näher dargestellten Werkzeugraum der Tiefziehanlage befindet sich ein Hubtisch 6, auf dem das Trägerteil bzw. der Träger 7 auf einem Trägerwerkzeug 7' angeordnet ist. Der Träger 7 ist hier der Grundkörper einer TürInnenverkleidung eines Kraftfahrzeuges. Der Hubtisch 6 ist in vertikaler Richtung und somit auch relativ zur Strahlungsheizung 8 verfahrbar. Die Strahlungsheizung 8 ist als beidseitiger Strahlungsheizkörper ausgebildet mit einer nach unten ausgerichteten Formträgerheizung (Infrarotheizung) 9 für die Trägerstruktur und einer nach oben ausgerichteten Unterheizung 10, ebenfalls als Infrarotheizung ausgebildet, zur Aktivierung der auf der Unterseite der Folie 1 befindlichen Kleberschicht 2.

Oberhalb der Folie 1 ist eine weitere Infrarotheizung angeordnet, nämlich die Oberheizung 11, die für die Durchwärmung der Folie benötigt wird, bis dass eine Folientemperatur erreicht ist, die eine Verformung der Folie beim Tiefziehen auf die Trägerstruktur erlaubt.

Dabei kann die auf dem Hubtisch 6 befindliche Trägerstruktur 7 zunächst abgesenkt und danach die Heizungen 9, 10 und 11 eingefahren und bezüglich der bereits vorher eingebrachten Folie 1 positioniert werden. Anschließend wird der Hubtisch in die in der Fig. 2 gezeigte Position hochgefahren, in der der Träger 7 sich nahe dem Heizkörper 9 befindet. Folie und Träger werden in dichter Nachbarschaft bis auf die erforderliche Temperatur erwärmt, wonach der Hubtisch wieder abgesenkt und die Infrarotheizungen entfernt werden. Danach startet der Tiefziehprozess, bei dem die Folie 1 gleichzeitig verformt und auf den Träger 7 aufgeklebt wird.

## Patentansprüche

1. Verfahren zur Herstellung eines Formkörpers zur Auskleidung des Innenraums eines Kraftfahrzeugs, der aus einer Trägerstruktur räumlicher Ausdehnung und einer auf die Trägerstruktur (7, 7') aufgebrachten warmformbaren Kunststoff-Folie (1) besteht, insbesondere einer Kunststoff-Folie mit einer dreidimensionalen Oberflächenstruktur auf ihrer der Trägerstruktur abgewandten Oberseite, wobei die Kunststoff-Folie (1) in einem Tiefziehverfahren auf die Trägerstruktur aufgeklebt wird, wobei die Kunststoff-Folie mit einer bereits im Anlieferungszustand vorhandenen Schicht eines aktivierbaren Klebers (2) auf ihrer der Trägerstruktur (7, 7') zugewandten Unterseite versehen ist und dass der Kleber (2) vor dem Tiefziehen so aktiviert wird, dass eine ausreichende Klebfähigkeit der Kleberschicht auf der Trägerstruktur (7, 7') erreicht wird, wobei die Kunststoff-Folie (1) in einem unter Zufuhr von Wärme durchgeführten Tiefziehverfahren auf die Trägerstruktur (7, 7') aufgeklebt wird, wobei der Kleber (2) und die der Kunststoff-Folie (1) zugewandte Oberfläche der Trägerstruktur (7, 7') vor dem Tiefziehen soweit erwärmt werden, dass die Kunststoff-Folie (1) verformbar, der Kleber (2) durch die Erwärmung aktiviert und eine ausreichende Klebfähigkeit der Kleberschicht auf der Trägerstruktur (7, 7') erreicht wird, wobei die Temperatur zur Aktivierung des Klebers wesentlich oberhalb der bei Transport und Lagerung der Kunststoff-Folie erreichbaren Temperaturen liegt und die Kunststoff-Folie, der Kleber und die der Kunststoff-Folie zugewandten Oberfläche der Trägerstruktur erst unmittelbar vor Verformung und Verklebung durch Strahlungsheizungen (9, 10, 11) erwärmt werden, wobei die Kunststoff-Folie mit ihrer Kleberschicht beidseitig und die der Kunststoff-Folie zugewandten Oberfläche der Trägerstruktur einseitig durch Strahlungsheizungen erwärmt werden, **dadurch gekennzeichnet, dass** die Abstände der Strahlungsheizungen zur Kunststoff-Folie und/oder zu der der Kunststoff-Folie zugewandten Oberfläche der Trägerstruktur während der Erwärmung dadurch verändert werden, dass die Trägerstruktur (7) auf einem Hubtisch (6) angeordnet ist, der relativ zu einer der Strahlungsheizungen verfahrbar ist.

2. Verfahren nach Anspruch 1, **dadurch gekennzeichnet, dass** die Trägerstruktur (7) aus einem Faserverbundwerkstoff besteht.

3. Verfahren nach Anspruch 1, **dadurch gekennzeichnet, dass** der Kleber aus mehreren Komponenten besteht, von denen mindestens eine bereits im Anlieferungszustand vorhandenen ist der Kleber vor dem Tiefziehen durch Zugabe mindestens einer weiteren Komponente aktiviert und eine ausreichende Klebfähigkeit der Kleberschicht auf der Trägerstruktur erreicht wird.

## Claims

1. Method for producing a moulding for lining the interior of a motor vehicle, which consists of a supporting structure of a spatial extent and a thermoformable plastics film (1) applied to the supporting structure (7, 7'), in particular a plastics film with a three-dimensional surface structure on its upper side facing away from the supporting structure, wherein the plastics film (1) is adhesively attached to the supporting structure in a deep-drawing process, wherein the plastics film is provided with a layer, already present in the assupplied state, of an activatable adhesive (2) on its underside facing the supporting structure (7, 7') and the adhesive (2) is activated before the deep drawing in such a way that a sufficient adhesiveness of the adhesive layer on the supporting structure (7, 7') is achieved, wherein the plastics film (1) is adhesively attached to the supporting structure (7, 7') in a deep-drawing process carried out while heat is supplied, wherein the adhesive (2) and the surface of the supporting structure (7, 7') facing the plastics film (1) are heated before the deep drawing to the extent that the plastics film (1) is deformable, the adhesive (2) is activated by the heating and a sufficient adhesiveness of the adhesive layer on the supporting structure (7, 7') is achieved, wherein the temperature for the activation of the adhesive lies significantly above the temperatures that can be reached during transport and storage of the plastics film and the plastics film, the adhesive and the surface of the supporting structure facing the plastics film are only heated by radiant heaters (9, 10, 11) immediately before deformation and adhesive bonding, wherein the plastics film with its adhesive layer is heated on both sides and the surface of the supporting structure facing the plastics film is heated on one side by radiant heaters, **characterized in that** the distances of the radiant heaters from the plastics film and/or from the surface of the supporting structure facing the plastics film are varied during the heating by the supporting structure (7) being arranged on a lifting table (6), which is displaceable in relation to one of the radiant heaters.

2. Method according to Claim 1, **characterized in that** the supporting structure (7) consists of a fibre composite material.

3. Method according to Claim 1, **characterized in that** the adhesive consists of a number of components, of which at least one is already present in the assupplied state, the adhesive is activated before the deep drawing by adding at least one further component and a sufficient adhesiveness of the adhesive layer on the supporting structure is achieved.

## Revendications

1. Procédé de fabrication d'un corps moulé pour l'habillage de l'espace intérieur d'un véhicule automobile, qui se compose d'une structure de support d'extension spatiale et d'une feuille de matière plastique (1) déformable à chaud déposée sur la structure de support (7, 7'), en particulier d'une feuille de matière plastique avec une structure superficielle tridimensionnelle sur son côté supérieur situé à l'opposé de la structure de support, dans lequel on colle la feuille de matière plastique (1) sur la structure de support dans un procédé d'emboutissage profond, dans lequel la feuille de matière plastique est munie d'une couche de colle activable (2) déjà présente dans l'état de livraison sur son côté inférieur tourné vers la structure de support (7, 7') et on active la colle (2) avant l'emboutissage profond, de telle manière que l'on atteigne un pouvoir adhésif suffisant de la couche de colle sur la structure de support (7, 7'), dans lequel on colle la feuille de matière plastique (1) sur la structure de support (7, 7') dans un procédé d'emboutissage profond exécuté avec apport de chaleur, dans lequel on chauffe la colle (2) et la surface de la structure de support (7, 7') tournée vers la feuille de matière plastique (1) avant l'emboutissage profond à un point tel que la feuille de matière plastique (1) soit déformable, que la colle (2) soit activée par le chauffage et qu'un pouvoir adhésif suffisant de la couche de colle sur la structure de support (7, 7') soit atteint, dans lequel la température pour l'activation de la colle se situe sensiblement au-dessus des températures pouvant être atteintes lors du transport et du stockage de la feuille de matière plastique et on ne chauffe la feuille de matière plastique, la colle et la surface de la structure de support tournée vers la feuille de matière plastique qu'immédiatement avant la déformation et le collage au moyen de dispositifs de chauffage par rayonnement (9, 10, 11), dans lequel on chauffe la feuille de matière plastique avec sa couche de colle sur les deux côtés et la surface de la structure de support tournée vers la feuille de matière plastique sur un côté au moyen de dispositifs de chauffage par rayonnement, **caractérisé en ce que** l'on fait varier les distances des dispositifs de chauffage par rayonnement à la feuille de matière plastique et/ou à la surface de la structure de support tournée vers la feuille de matière plastique pendant le chauffage du fait que la structure de support (7) est disposée sur une table élévatrice (6), qui est déplaçable par rapport à un des dispositifs de chauffage par rayonnement.

2. Procédé selon la revendication 1, **caractérisé en ce que** la structure de support (7) se compose d'un matériau composite renforcé par des fibres.

3. Procédé selon la revendication 1, **caractérisé en ce que** la colle se compose de plusieurs composants, dont au moins un est déjà présent dans l'état de livraison, on active la colle avant l'emboutissage profond par ajout d'au moins un autre composant et on atteint un pouvoir adhésif suffisant de la couche de colle sur la structure de support.
